# EUROPEAN PATENT SPECIFICATION

(11) **EP 2 919 415 B1**
(45) Date of publication and mention of the grant of the patent: **11.07.2018**
(21) Application number: 13853229.6
(22) Date of filing: 09.08.2013
(51) Int. Cl.: H04L 12/26, H04L 12/12, G08B 13/196, H04W 4/14

(54) **ONLINE INDICATION METHOD, APPARATUS AND SYSTEM**
ONLINE ANZEIGEVERFAHREN, VORRICHTUNG UND SYSTEM
PROCÉDÉ, APPAREIL ET SYSTÈME D'INDICATION EN LIGNE

(30) Priority: 12.11.2012 CN 201210450435
(43) Date of publication of application: 16.09.2015
(73) Proprietor: ZTE Corporation, Shenzhen, Guangdong 518057 (CN)
(72) Inventor: YANG, Dan, Shenzhen Guangdong 518057 (CN)
(74) Representative: Carangelo, Pierluigi
(86) International application number: PCT/CN2013/081197
(87) International publication number: WO 2014/071756

(56) References cited:
- CN-A- 102 082 948
- CN-A- 102 209 235
- GB-A- 2 363 028
- US-A1- 2008 030 579
- US-A1- 2009 150 356
- US-A1- 2009 158 364
- Thomas Jorgensen ET AL: "Z-Wave as Home Control RF Platform", HomeToys, 1 June 2005 (2005-06-01), XP055221569, Retrieved from the Internet: URL:http://www.hometoys.com/content.php?ur l=/htinews/jun05/articles/zensys/homecontr ol.htm [retrieved on 2015-10-16]

## Description

### TECHNICAL FIELD

The present invention relates to the field of communications, and in particular to an online indication method, device and system.

### BACKGROUND

A video monitoring system is a system which manages a front end camera, and can forward real-time video code streams of the front end camera to a client for the client to watch according to a set authority, and at the same time, can realize functions, such as real-time video recording according to the setting. As science and technology become more and more developed, people's safety awareness becomes higher, and there are also more and more monitoring requirements on the ambient environment thereof, and the application of the video monitoring system also becomes more and more wide. Especially in the field of national securities, the video monitoring system even plays an irreplaceable role.

A front end video encoder device of a video monitoring system is a PU. In the practical application of a present network, sometimes the situation of PU power off and offline (such as a power failure) is met, and under the situation, if wanting to re-start the PU, it requires to go to a position where the PU is located and to start manually, which is very inconvenient. Especially PUs of the present network are all distributed in different geographical positions, which is very troublesome. In addition, under some rather emergency situations, if a PU of a camera in a key position is power off and offline which causes interruption of real-time monitoring or recording, it may bring very severe consequences. For example, if a certain criminal suspect appears in a certain area, all PUs in the area are required to be in working states, and if a PU therein is power off and offline at the time and cannot provide a monitoring service, then it may cause the criminal suspect to escape.

With regard to the problem in the relevant technology that a PU cannot automatically starts online when an emergency situation is met after offline, an effective solution has not been proposed yet at present.

GB 2 363 028 A discloses a surveillance system with remote receiving unit.

US 2009/158364 A1 discloses a system and method for remotely controlling a camera.

URL:http://www.hometoys.com/content.php?url=/htinews/jun05/articles/zensy s/homecontrol.htm discloses a Z-wave as home control RF platform.

US 2009/150356 A1 discloses a method for discovering network of home or building control devices.

### SUMMARY

With regard to the problem in the relevant technology that a PU cannot automatically starts online when an emergency situation is met after offline, the present invention provides an online indication method, device and system so as to at least solve the above-mentioned problem.

According to one aspect of the present invention, an online indication method is provided, and the method comprises: checking an online state of each PU (front end video encoder device of a video monitoring system) in a designated area; and if there is at least one offline PU, sending indication information to the at least one offline PU, wherein the indication information is used for indicating to the above-mentioned offline PU to automatically start online.

Before checking the online state of the PUs in the above-mentioned designated area, the above-mentioned method further comprises: receiving an alarm message of a PU; and searching for the above-mentioned each PU in the designated area where the above-mentioned PU is located.

Before receiving the alarm message of the above-mentioned PU, the above-mentioned method further comprises: receiving PU list information reported by any PU in a video monitoring system, wherein the above-mentioned PU list information records information about each PU in the designated area where the above-mentioned any PU is located.

Before receiving the above-mentioned PU list information reported by the above-mentioned any PU, the above-mentioned method further comprises: the above-mentioned any PU searching for PUs which are located in the area thereof; the above-mentioned any PU sending a request message to at least one searched PU to request to acquire at least one identity (ID) of the searched PU mentioned above, the above-mentioned any PU receiving a response message comprising at least one ID of the at least one searched PU and the above-mentioned any PU constructing the above-mentioned PU list information according to the at least one acquired ID mentioned above.

Searching for the above-mentioned each PU in the area where the above-mentioned PU is located comprises: according to the above-mentioned PU list information, searching for the above-mentioned each PU in the designated area where the above-mentioned PU is located.

After receiving the above-mentioned PU list information reported by the above-mentioned any PU, the above-mentioned method further comprises: updating the above-mentioned PU list information corresponding to the above-mentioned any PU.

Sending the above-mentioned indication information to the above-mentioned offline PU comprises: assembling a short message comprising the indication information and sending, via a short message interface, the assembled short message to a mobile phone number of the offline PU, wherein the short message interface is an interface between the video monitoring system and the offline PU.

Sending the above-mentioned indication information to the above-mentioned offline PU comprises: sending the above-mentioned indication information to the above-mentioned offline PU through a mobile network.

The above-mentioned any PU searching for a PU which is located in the area thereof comprises: the above-mentioned any PU searching, through Wireless Fidelity (WIFI), for a PU which is located in the area thereof.

According to another aspect of the present invention, an online indication device is provided, and the device comprises: a state checking component configured to check the online state of each PU (front end video encoder device of a video monitoring system) in a designated area; and an online indication component configured to, if the above-mentioned state checking component checks that there is an offline PU, send indication information to the offline PU, wherein the indication information is used for indicating that the offline PU automatically starts online.

The above-mentioned device further comprises: an alarm receiving component configured to receive an alarm message of the PU; and a searching component configured to search for the above-mentioned each PU in the designated area where the above-mentioned PU is located.

The above-mentioned device further comprises: a list receiving component configured to receive PU list information reported by any PU in a video monitoring system, wherein the above-mentioned PU list information records information about each PU in a designated area where the above-mentioned any PU is located.

The above-mentioned searching component comprises: a searching element configured to, through the above-mentioned PU list information, search for the above-mentioned each PU in the designated area where the above-mentioned PU is located.

The above-mentioned device further comprises: a list updating component configured to update the above-mentioned PU list information corresponding to the above-mentioned any PU.

According to still another aspect of the embodiments of the invention, an online indication system is provided, and the system comprises: the above-mentioned online indication device and a (front end video encoder device of a video monitoring system) PU, and the PU comprises: a searching component configured to search each PU in the area where the above-mentioned PU is located; an identification request component configured to send a request message to each searched PU to request acquiring an ID of the above-mentioned each PU, wherein the PU is configured to receive a response message comprising the ID of the each searched PU, and a list constructing component configured to construct the above-mentioned PU list information according to the acquired ID mentioned above.

The above-mentioned PU further comprises: a list reporting component configured to report the constructed PU list information mentioned above to the above-mentioned online indication device.

In the embodiments of the present invention, offline PUs within a certain area may be found according to physical location information of the PUs, and then the above-mentioned offline Pus are trigged by the indication information to be automatically online, so that the problem in the related art that the PUs cannot automatically start online in the case of emergency after being offline is solved, and there is no need for users to start the PUs manually. Therefore, the solution provided by the embodiments of the present invention is greatly convenient for the users, and it may ensure that each PU in a critical area is in a normal working state in case of emergency and improve the working performance of the PUs.

### BRIEF DESCRIPTION OF THE DRAWINGS

Drawings, provided for further understanding of the present invention and forming a part of the specification, are used to explain the present invention together with embodiments of the present invention rather than to limit the present invention. In the accompanying drawings:
Fig. 1 shows a flowchart of an online indication method according to an embodiment of the present invention;
Fig. 2 shows a flowchart of a method for automatically waking a near PU by a video monitoring system after receiving an alarm according to an embodiment of the present invention;
Fig. 3 shows a flowchart of a method for searching for near PUs through WIFI by a PU and reporting same to a video monitoring system according to an embodiment of the present invention;
Fig. 4 shows a flowchart of a method for automatically triggering a short message to wake and alarm all PUs near a PU according to an embodiment of the present invention;
Fig. 5 is a structure diagram of an online indication device according to an embodiment of the present invention; and
Fig. 6 is a structure diagram of an online indication system according to an embodiment of the present invention.

### DESCRIPTION OF EMBODIMENTS

The preferred embodiments are described in conjunction with the drawings as follows. It should be noted that the embodiments and the characteristics of the embodiments can be combined with each other if no conflict is caused.

The embodiments of the present invention provide an online indication method, device and system, and detailed illustration is made below through designated embodiments.

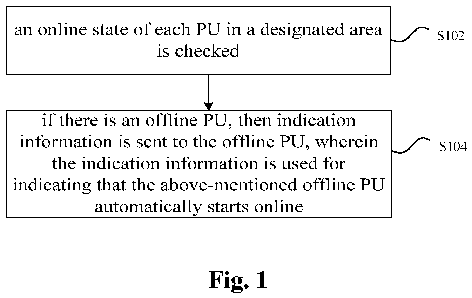

An present embodiment provides an online indication method, and Fig. 1 is a flowchart of an online indication method according to an embodiment of the present invention, and as shown in Fig. 1, the method comprises the following steps (step S 102-step S 104).

Step S102, an online state of each PU in a designated area is checked;

Step S104, if there is an offline PU, then indication information is sent to the offline PU, wherein the indication information is used for indicating that the above-mentioned offline PU automatically starts online.

In the above-mentioned method, offline PUs within a certain area may be found according to physical location information of the PUs, and then the above-mentioned offline PUs are trigged by the indication information to be automatically online, so that the problem in the related art that the PUs cannot automatically start online in the case of emergency after being offline is solved, and thus, there is no need for users to start the PUs manually. The above solution is greatly convenient for the users, and may ensure that all the PUs in a critical area are in a normal working state in case of emergency and improve the working performance of the PUs.

The online indication method provided in the present embodiment is a method that is triggered by alarming and searching for offline PUs in a certain area range according to physical position information of the PUs, and then automatically triggers these PUs to come online through a short message. Firstly, the PU is made to be able to receive a short message or a multimedia message, for example, a SIM card may be installed on the PU so that the PU may receive a short message and may automatically start online after receiving a short message of a certain instruction. In addition, when a video monitoring system opens an account for a PU, a mobile user directory number (Mobile Directory Number, MDN for short) of the PU is required to be set, that is, the video monitoring system may send a short message to the MDN number.

Then, the PU is able to search for a near PU through a wireless network, for example, a WIF component may be installed on the PU (if the PU itself is a wireless PU, then a wife component does not need to be installed independently), so that it may automatically search for the near PU through a WIFI wireless network and report information about the near PU to a video monitoring system for recording same.

When the video monitoring system receives an alarm of a certain PU, all PUs are found in the near area (the range size of the area may be set in advance according to practical situations) recorded in the video monitoring system thereof. The video monitoring system checks online states of these PUs, and if there is an offline PU, then the video monitoring system automatically sends a short message of a certain instruction to the PU to trigger it to automatically start online. The above-mentioned manner not only does not need a user to manually start the PU, which is greatly convenient for a user, but also may automatically trigger the PU to start online when there is an emergency, guaranteeing the PU at a key position may be in a working state in case of emergency, and the whole process does not need user intervention and is transparent to the user.

In the above-mentioned step S102, a checking operation of the online state of the PU may be set to periodically execute the operation, or execute the checking operation when a triggering condition is received. The present embodiment provides a preferred embodiment, that is, before checking the online state of the PU in a designated area, the above-mentioned method further comprises: receiving an alarm message of the PU; and after receiving the alarm message, searching for each PU in the designated area where the above-mentioned PU is located., Through the manner, the alarm message of the PU plays the role of triggering to execute a checking operation, and after the PU in the executing area is found, basis is provided for checking the online state of the PU.

Preferably, before receiving the alarm message of the PU, the above-mentioned method may further comprise: receiving PU list information reported by any PU in a video monitoring system, wherein the PU list information records information about each PU in a designated area where any PU is located.

Through the above-mentioned manner, received PU list information provides basis for subsequently searching for the PU in the designated area; preferably, searching for the above-mentioned each PU in the area where the PU is located comprises: according to the above-mentioned PU list information, searching for the above-mentioned each PU in the designated area where the above-mentioned PU is located.

With regard to a constructing process of the PU list information, the present embodiment provides a preferred embodiment, that is, before receiving the PU list information reported by any PU, the above-mentioned method further comprises: any PU searching for a PU which is located in the area thereof; any PU sending a request message to a searched PU, wherein the request message is used for requesting to acquire an ID of the searched PU mentioned above; and the any PU constructing the PU list information according to the acquired ID mentioned above.

After receiving the PU list information reported by any PU, the PU list information corresponding to the PU may be updated, or the PU list information corresponding to other PUs in the PU list information also may be updated, that is, it may be understood as updating the PU list information corresponding to any PU. Through the manner, the accuracy of searching for the PU is improved.

In the above-mentioned step S104, sending the above-mentioned indication information to the offline PU comprises: through a short message or multimedia message interface, using a manner of inputting a mobile user number (for example, an MDN number) of the offline PU to send the above-mentioned indication information to the offline PU. In addition, sending the above-mentioned indication information to the offline PU may comprise: sending the above-mentioned indication information to the offline PU through a mobile network. That is, an SIM card may be installed on the PU, and then the PU may receive the short message or multimedia message through a mobile network. Preferably, any PU searching for a PU which is located in the area thereof comprises: any PU searching for a PU which is located in the area thereof through WIFI. Through the above-mentioned preferred embodiment, the efficiency and accuracy of the online indication method in an application process are improved.

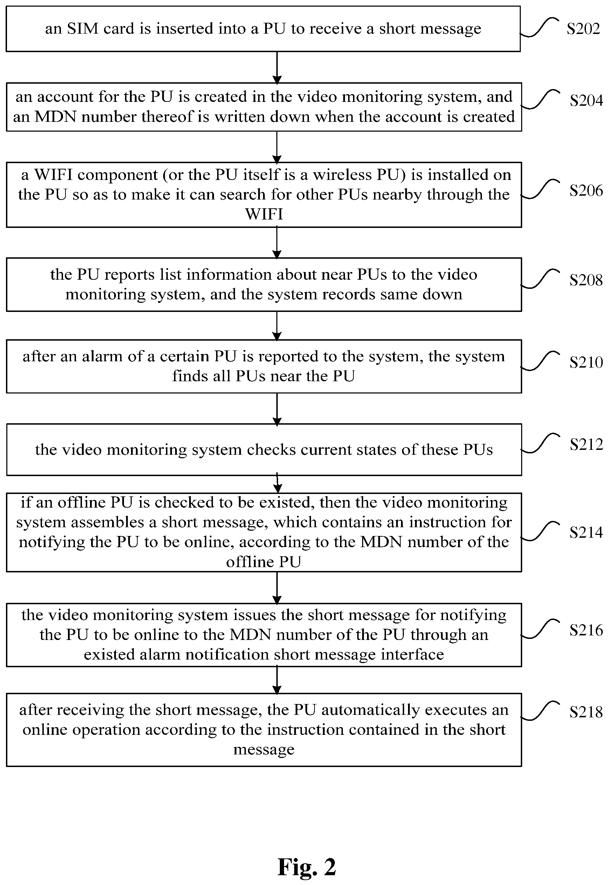

The following describes a method that a video monitoring system automatically wakes a near PU after receiving an alarm in detail. Fig. 2 shows a flowchart of a method for automatically waking a near PU by a video monitoring system after receiving an alarm according to an embodiment of the present invention, and as shown in Fig. 2, the method comprises the following steps (step S202-step S218).

Step S202, an SIM card is inserted into a PU to support to receive a short message.

Preferably, the PU needs to have functions, such as accessing a wireless global system for mobile communication (Global System for Mobile Communications, GSM for short) and third generation mobile communication technology (3rd-generation, 3G for short) networks, and have a socket for the SIM card. An ordinary SIM card of a GSM and 3G networks is used to insert into the PU, and in this way, the PU has the function of receiving a short message.

Step S204, an account for the PU is created in the video monitoring system, and the MDN number thereof is written down when the account is created.

Step S206, a WIFI component (or the PU itself is a wireless PU) is installed on the PU so as to make it can search for other PUs nearby through the WIFI. In addition, when an account is created for the PU on an OP account of the video monitoring system, the MDN number of the PU is required to be written in.

Step S208, the PU reports list information about near PUs to the video monitoring system, and the system records same down.

Step S210, after an alarm of a certain PU is reported to the system, the system finds all PUs near the PU.

Step S212, the video monitoring system checks current states of these PUs.

Step S214, if an offline PU is checked to be existed, then the video monitoring system assembles a short message, which contains an instruction for notifying the PU to be online, according to the MDN number of the offline PU.

Step S216, the video monitoring system issues the short message for notifying the PU to be online to the MDN number of the PU through an existed alarm notification short message interface.

Step S218, after receiving the short message, the PU automatically executes an online operation according to the instruction contained in the short message.

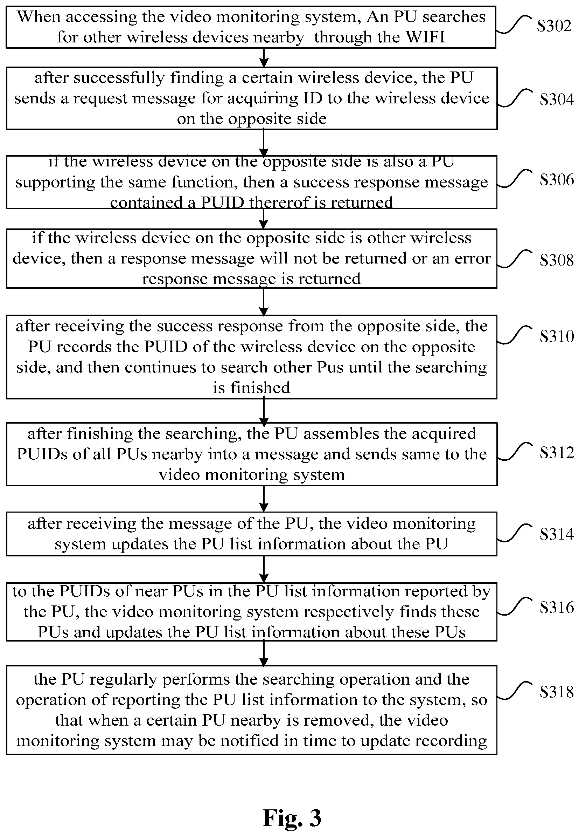

In the above-mentioned steps, searching for near PUs through WIFI and reporting same to the video monitoring system for recording is a very important step, which will be described in detail here. Fig. 3 shows a flowchart of a method for searching for near PUs by a PU through the WIFI by a PC and reporting same to a video monitoring system according to an embodiment of the present invention, and as shown in Fig. 3, the method comprises the following steps (step S302-step S318).

Step S302, When the PU accesses the video monitoring system, other wireless devices nearby are searched through the WIFI.

Step S304, after successfully finding a certain wireless device, the PU sends a request message for acquiring the identity (ID for short) (hereinafter simply referred to as PUID) of the wireless device on the opposite side to the wireless device on the opposite side.

Step S306, if the wireless device on the opposite side is also a PU supporting the same function, then a success response message contained a PUID of the wireless device on the opposite side is returned.

Step S308, if the wireless device on the opposite side is other wireless device, then a response message will not be returned or an error response message is returned.

Step S310, after receiving the success response from the opposite side, the PU records the PUID of the wireless device on the opposite side, and then continues to search other Pus until the searching is finished.

Step S312, after finishing the searching, the PU assembles the acquired PUIDs of all PUs nearby into a message and sends same to the video monitoring system.

In the video monitoring system, the record of each PU will save the PU list information about the PU for identifying what other PUs are near the PU. In the PU list information, the PUIDs are used for uniquely identifying the PUs.

Step S314, after receiving the message of the PU, the video monitoring system updates the PU list information about the PU.

Step S316, according to the PUIDs of near PUs in the PU list information reported by the PU, the video monitoring system respectively finds these PUs and updates the PU list information about these PUs.

Step S318, the PU regularly performs the searching operation and the operation of reporting the PU list information to the system, so that when a certain PU nearby is removed, the video monitoring system may be notified in time to update recording.

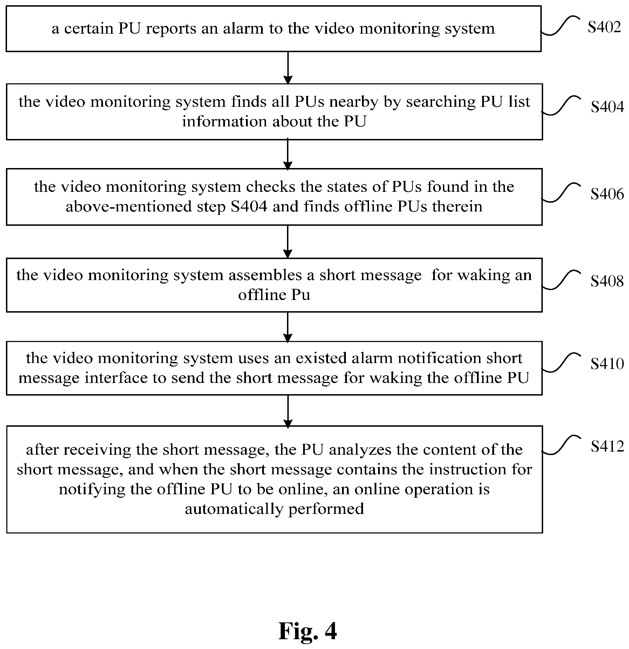

The following describes the flow that when an alarm situation appears and a certain PU reports alarming, the system automatically triggers a short message to wake all PUs near the PU. Fig. 4 shows a flowchart of a method for automatically triggering a short message to wake and alarm all PUs near a PU by a video monitoring system according to an embodiment of the present invention, and as shown in Fig. 4, the method comprises the following steps (step S402-step S412).

Step S402, a certain PU reports an alarm to the video monitoring system.

Step S404, the video monitoring system finds all PUs nearby by searching PU list information about the PU.

Step S406, the video monitoring system checks the states of PUs found in the above-mentioned step S404 and finds offline PUs therein.

Step S408, the video monitoring system assembles a short message, which contains an instruction for notifying a offline PU to be online and is used for waking the offline Pu, wherein the content of the instruction is determined by negotiation between the video monitoring system and the PU, such as "sx"; and a target number of the message is the MDN number of each PU found in step S406.

Step S410, the video monitoring system uses an existed alarm notification short message interface to send the short message for waking the offline PU.

Step S412, after receiving the short message, the PU analyzes the content of the short message, and when the short message contains the instruction for notifying the offline PU to be online, an online operation is automatically performed.

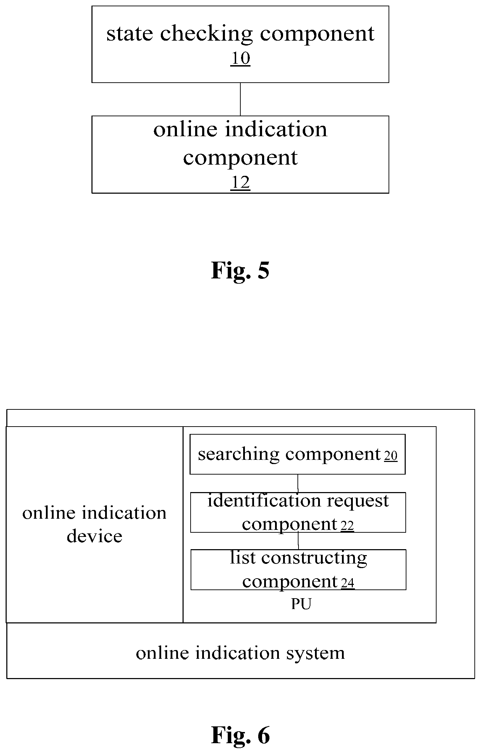

Corresponding to the online indication method provided in the above-mentioned embodiments, the present embodiment provides an online indication device, and the device may be provided on a video monitoring system side for realizing the above-mentioned embodiment. Fig. 5 is a structure diagram of an online indication device according to an embodiment of the present invention, and as shown in Fig. 5, the device comprises: a state checking component **10** and an online indication component **12.** The structure is described below.

A state checking component **10** is configured to check an online state of each PU in a designated area.

An online indication component **12** is connected to the state checking component **10**, and configured to, based on that the state checking component **10** checks that there is an offline PU, send indication information to the above-mentioned offline PU, wherein the indication information is used for indicating that the above-mentioned offline PU automatically starts online.

By means of the above-mentioned device, offline PUs within a certain area may be found according to physical location information of the PUs, then the above-mentioned offline PUs are automatically online when receiving the indication information, and the problem in the related art that the PUs cannot automatically start online in the case of emergency after being offline is solved, and thus, there is no need for users to start the PUs manually, which is greatly convenient for the users, and can ensure that all the PUs in a critical area are in a normal working state in case of emergency, and improves the working performance of the PUs.

In the above-mentioned state checking component **12**, a checking operation for checking the online states of the PUs may be periodically executed, or may be executed when a triggering condition is received. One embodiment provides a preferred embodiment, that is, the above-mentioned device further comprises: an alarm receiving component configured to receive an alarm message of the PU; and a searching component configured to search for the above-mentioned each PU in the designated area where the above-mentioned PU is located. Through the structure, the alarm message of the PU plays the role of triggering to execute a checking operation, and after one or more PUs in the area in which the checking operation is performed are found, the online states of the one or more Pus are checked.

Preferably, before receiving the alarm message of the PU, the above-mentioned device further comprises: a list receiving component configured to receive PU list information reported by any PU in a video monitoring system, wherein the PU list information records information about each PU in a designated area where the above-mentioned any PU is located.

Through the above-mentioned structure, received PU list information provides basis for subsequently searching for the PU in the designated area; preferably, the above-mentioned searching component comprises: a searching element configured to, through the above-mentioned PU list information, search for the above-mentioned each PU in the designated area where the above-mentioned PU is located.

After receiving the PU list information reported by any PU, the PU list information corresponding to the PU may be updated, or the PU list information corresponding to other PUs in the PU list information also may be updated, that is, it may be understood as updating the PU list information corresponding to any PU. For this, the present embodiment provides a preferred embodiment, that is, the above-mentioned device further comprises: a list updating component configured to update PU list information corresponding to any PU. Through the structure, the accuracy of searching for the PU is improved.

Preferably, the above-mentioned online indication component **12** is configured to send, via a short message interface, the above-mentioned indication information to the above-mentioned offline PU in a manner of inputting a mobile user number of the offline PU. Preferably, the above-mentioned online indication component **12** is configured to send an indication message to the offline PU through a mobile network.

Corresponding to the online indication method provided in the above-mentioned embodiment, the present embodiment provides an online indication system, and the system is provided for realizing the above-mentioned embodiment. Fig. 6 is a structure diagram of an online indication system according to an embodiment of the present invention, and as shown in Fig. 6, the system comprises: an online indication device provided in the above-mentioned embodiment, and a PU. The PU comprises: a searching component **20**, an identification request component **22** and a list constructing component **24**. The structure is described below.

A searching component **20** is configured to search for each PU in an area where the above-mentioned PU is located.

An identification request component **22** is connected to the searching component **20** and configured to send a request message to each searched PU, wherein the request message is used for requesting acquiring an ID of the above-mentioned each PU.

A list constructing component **24** is connected to the identification request component **22** and configured to construct the above-mentioned PU list information according to the acquired ID mentioned above.

By means of the above-mentioned system, offline PUs within a certain area may be found according to physical location information of the PUs, then the above-mentioned offline PUs are automatically online according to the indication information, and the problem in the related art that the PUs cannot automatically start online in the case of emergency after being offline is solved, and thus, there is no need for users to start the PUs manually, which is greatly convenient for the users, and can ensure that all the PUs in a critical area are in a normal working state in case of emergency, and improves the working performance of the PUs.

After the list constructing component **24** constructs the PU list information, the above-mentioned PU further comprises: a list reporting component configured to report the constructed PU list information mentioned above to the above-mentioned online indication device. Preferably, the above-mentioned searching component **20** may search for at least one PU which is located in the area thereof through WIFI.

It can be seen from the above description that in the embodiments of the present invention, there is no need for users to start the PUs manually, so that it is greatly convenient for the users. In addition, the embodiments of the present invention can ensure that all the PUs in a critical area are in a normal working state in case of emergency, thus improving the working performance of the PUs.

Apparently, those skilled in the art shall understand that the above components and steps of the present invention can be realized by using general purpose calculating device, can be integrated in one calculating device or distributed on a network which consists of a plurality of calculating devices, and alternatively they can be realized by using the executable program code of the calculating device, so that consequently they can be stored in the storing device and executed by the calculating device, in some cases, can perform the shown or described step in sequence other than herein, or they are made into integrated circuit component respectively, or a plurality of components or steps thereof are made into one integrated circuit component. In this way, the present invention is not restricted to any particular hardware and software combination.

The above description is only preferred embodiments of the present invention and is not intended to limit the present invention, and the present invention can have a variety of changes and modifications for ordinary person skilled in the field.

## Claims

1. An online indication method, comprising:
checking an online state of each front end video encoder device of a video monitoring system, PU, in a designated area (S102); and
based on that there is an offline PU, sending indication information to the offline PU, wherein the indication information is used for indicating that the offline PU automatically starts online (S104).

2. The method according to claim 1, **characterized in that** before checking the online state of each PU in a designated area, the method further comprises:
receiving an alarm message of a PU; and
searching for the each PU in the designated area where the PU is located.

3. The method according to claim 2, **characterized in that** before receiving the alarm message of the PU, the method further comprises:
receiving PU list information reported by any PU in a video monitoring system, wherein the PU list information records information about each PU in the designated area where the any PU is located.

4. The method according to claim 3, **characterized in that** before receiving the PU list information reported by the any PU, the method further comprises:
the any PU searching for PUs which are located in the area where the any PU is located;
the any PU sending a request message to at least one searched PU to request acquiring at least one identity ,ID, of the at least one searched PU;
the any PU receiving a response message comprising at least one ID of the at least one searched PU;
the any PU constructing the PU list information according to the at least one acquired ID.

5. The method according to claim 3, **characterized in that** searching for the each PU in the area where the PU is located comprises:
according to the PU list information, searching for the each PU in the designated area where the PU is located.

6. The method according to claim 3, **characterized in that** after receiving the PU list information reported by the any PU, the method further comprises:
updating the PU list information corresponding to the any PU.

7. The method according to claim 1, **characterized in that** sending the indication information to the offline PU comprises:
assembling a short message comprising the indication information, and sending, via a short message interface, the assembled short message to a mobile phone number of the offline PU, wherein the short message interface is an interface between the video monitoring system and the offline PU.

8. The method according to claim 1, **characterized in that** sending the indication information to the offline PU comprises:
sending the indication information to the offline PU via a mobile network.

9. The method according to claim 5, **characterized in that** the any PU searching for the at least one PU which is located in the area where the any PU is located comprises:
the any PU searching, through Wireless Fidelity, WIFI, for the at least one PU which is located in the area where the any PU is located.

10. An online indication device, comprising:
a state checking component (10) configured to check an online state of each front end video encoder device of a video monitoring system ,PU, in a designated area; and
an online indication component (12) configured to, based on that the state checking component checks that there is an offline PU, send indication information to the offline PU, wherein the indication information is used for indicating that the offline PU automatically starts online.

11. The online indication device according to claim 10, **characterized in that** the device further comprises:
an alarm receiving component configured to receive an alarm message of the PU; and
a searching component configured to search for the each PU in the designated area where the PU is located.

12. The online indication device according to claim 11, **characterized in that** the device further comprises:
a list receiving component configured to receive PU list information reported by any PU in a video monitoring system, wherein the PU list information records information about each PU in the designated area where the any PU is located.

13. The online indication device according to claim 12, **characterized in that** the searching component comprises:
a searching element configured to, according to the PU list information, search for the each PU in the designated area where the PU is located;
preferably, the device further comprises: a list updating component configured to update the PU list information corresponding to the any PU.

14. An online indication system, **characterized by** comprising: an online indication device as claimed in any one of claims 10-13, and a front end video encoder device of a video monitoring system, PU, the PU comprising:
a searching component (20) configured to search for each PU in an area where the PU is located;
an identification request component (22) configured to send a request message to each searched PU to request acquiring identity ,ID, of the each PU; wherein the PU is configured to receive a response message comprising the ID of the each PU;
a list constructing component (24) configured to construct PU list information according to the acquired ID.

15. The online indication system according to claim 14, **characterized in that** the PU further comprises:
a list reporting component configured to report the constructed PU list information to the online indication device.

## Patentansprüche

1. Online-Anzeigeverfahren, umfassend:
Prüfen eines Online-Zustands jeder Frontend-Videocodiervorrichtung eines Videoüberwachungssystems, PU, in einem bestimmten Bereich (S102); und
basierend darauf, dass eine Offline-PU vorhanden ist, Senden von Anzeigeinformationen an die Offline-PU, wobei die Anzeigeinformationen für die Anzeige verwendet werden, dass die Offline-PU automatisch online startet (S104).

2. Verfahren nach Anspruch 1, **dadurch gekennzeichnet, dass** das Verfahren vor dem Prüfen des Online-Zustands jeder PU in einem bestimmten Bereich ferner umfasst:
Empfangen einer Alarmmeldung einer PU; und
Suchen nach der jeweiligen PU in dem bestimmten Bereich, in dem sich die PU befindet.

3. Verfahren nach Anspruch 2, **dadurch gekennzeichnet, dass** das Verfahren vor dem Empfangen der Alarmmeldung der PU ferner umfasst:
Empfangen von PU-Listeninformationen, die von einer beliebigen PU in einem Videoüberwachungssystem gemeldet werden, wobei die PU-Listeninformationen Informationen über jede PU in dem bestimmten Bereich aufzeichnen, in dem sich die beliebige PU befindet.

4. Verfahren nach Anspruch 3, **dadurch gekennzeichnet, dass** das Verfahren vor dem Empfangen der von der beliebigen PU gemeldeten PU-Listeninformationen ferner umfasst:
Suchen der beliebigen PU nach PUs, die sich in dem Bereich befinden, in dem sich die beliebige PU befindet;
Senden einer Anforderungsmeldung von der beliebigen PU an mindestens eine gesuchte PU, um das Erfassen von mindestens einer Identität, ID, der mindestens einen gesuchten PU anzufordern;
Empfangen einer Antwortmeldung an der beliebigen PU, die mindestens eine ID der mindestens einen gesuchten PU umfasst;
Aufbauen der PU-Listeninformationen gemäß der mindestens einen erfassten ID an der beliebigen PU.

5. Verfahren nach Anspruch 3, **dadurch gekennzeichnet, dass** das Suchen nach der jeweiligen PU in dem Bereich, in dem sich die PU befindet, umfasst:
Suchen nach der jeweiligen PU in dem bestimmten Bereich, in dem sich die PU befindet, gemäß den PU-Listeninformationen.

6. Verfahren nach Anspruch 3, **dadurch gekennzeichnet, dass** das Verfahren nach dem Empfangen der von der beliebigen PU gemeldeten PU-Listeninformationen ferner umfasst:
Aktualisieren der PU-Listeninformationen, die der beliebigen PU entsprechen.

7. Verfahren nach Anspruch 1, **dadurch gekennzeichnet, dass** das Senden der Anzeigeinformationen an die Offline-PU umfasst:
Zusammenstellen einer Kurzmeldung, die die Anzeigeinformationen umfasst, und Senden der zusammengestellten Kurzmeldung über eine Kurzmeldungsschnittstelle an eine Mobiltelefonnummer der Offline-PU, wobei die Kurzmeldungsschnittstelle eine Schnittstelle zwischen dem Videoüberwachungssystem und der Offline-PU ist.

8. Verfahren nach Anspruch 1, **dadurch gekennzeichnet, dass** das Senden der Anzeigeinformationen an die Offline-PU umfasst:
Senden der Anzeigeinformationen an die Offline-PU über ein mobiles Netzwerk.

9. Verfahren nach Anspruch 5, **dadurch gekennzeichnet, dass** das Suchen der beliebigen PU nach der mindestens einen PU, die sich in dem Bereich befindet, in dem sich die beliebige PU befindet, umfasst:
Suchen der beliebigen PU nach der mindestens einen PU, die sich in dem Bereich befindet, in dem sich die beliebige PU befindet, über Wireless Fidelity, WIFI.

10. Online-Anzeigevorrichtung, umfassend:
eine Zustandsprüfungskomponente (10), die zum Prüfen eines Online-Zustands jeder Frontend-Videocodiervorrichtung eines Videoüberwachungssystems, PU,in einem bestimmten Bereich ausgestaltet ist; und
eine Online-Anzeigekomponente (12), die basierend darauf, dass die Zustandsprüfungskomponente prüft, dass eine Offline-PU vorhanden ist, zum Senden von Anzeigeinformationen an die Offline-PU ausgestaltet ist, wobei die Anzeigeinformationen zum Anzeigen verwendet werden, dass die Offline-PU automatisch online startet.

11. Online-Anzeigevorrichtung nach Anspruch 10, **dadurch gekennzeichnet, dass** die Vorrichtung ferner umfasst:
eine Alarmempfangskomponente, die zum Empfangen einer Alarmmeldung der PU ausgestaltet ist; und
eine Suchkomponente, die zum Suchen nach der jeweiligen PU in dem bestimmten Bereich, in dem sich die PU befindet, ausgestaltet ist.

12. Online-Anzeigevorrichtung nach Anspruch 11, **dadurch gekennzeichnet, dass** die Vorrichtung ferner umfasst:
eine Listenempfangskomponente, die zum Empfangen von PU-Listeninformationen ausgestaltet ist, die von einer beliebigen PU in einem Videoüberwachungssystem gemeldet werden, wobei die PU-Listeninformationen Informationen über jede PU in dem bestimmten Bereich aufzeichnen, in dem sich die beliebige PU befindet.

13. Online-Anzeigevorrichtung nach Anspruch 12, **dadurch gekennzeichnet, dass** die Suchkomponente umfasst:
ein Suchelement, das zum Suchen nach der jeweiligen PU in dem bestimmten Bereich, in dem sich die PU befindet, gemäß den PU-Listeninformationen ausgestaltet ist;
wobei die Vorrichtung vorzugsweise ferner umfasst: eine Listenaktualisierungskomponente, die zum Aktualisieren der PU-Listeninformationen entsprechend der beliebigen PU ausgestaltet ist.

14. Online-Anzeigesystem, **dadurch gekennzeichnet, dass** es umfasst: eine Online-Anzeigevorrichtung nach einem der Ansprüche 10-13 und eine Frontend-Videocodiervorrichtung eines Videoüberwachungssystems, PU, wobei die PU umfasst:
eine Suchkomponente (20), die zum Suchen nach jeder PU in einem Bereich, in dem sich die PU befindet, ausgestaltet ist;
eine Identifikationsanforderungskomponente (22), die zum Senden einer Anforderungsmeldung an jede gesuchte PU ausgestaltet ist, um das Erfassen einer Identität, ID, von der jeweiligen PU anzufordern; wobei die PU zum Empfang von Folgendem ausgestaltet ist:
einer Antwortmeldung, die die ID der jeweiligen PU umfasst;
einer Listenaufbaukomponente (24), die zum Aufbauen der PU-Listeninformationen gemäß der erfassten ID ausgestaltet ist.

15. Online-Anzeigesystem nach Anspruch 14, **dadurch gekennzeichnet, dass** die PU ferner umfasst:
eine Listenmeldungskomponente, die zum Melden der aufgebauten PU-Listeninformationen an die Online-Anzeigevorrichtung ausgestaltet ist.

## Revendications

1. Procédé d'indication en ligne, comprenant :
la vérification d'un état en ligne de chaque dispositif codeur vidéo frontal d'un système de surveillance vidéo, d'une PU, dans une zone désignée (S102) ; et
étant donné qu'il existe une PU hors ligne, l'envoi d'informations d'indication à la PU hors ligne, les informations d'indication étant utilisées pour indiquer que la PU hors ligne démarre automatiquement en ligne (S104).

2. Procédé selon la revendication 1, **caractérisé en ce qu'**avant la vérification de l'état en ligne de chaque PU dans une zone désignée, le procédé comprend en outre :
la réception d'un message d'alarme d'une PU ; et
la recherche de chaque PU dans la zone désignée où se trouve la PU.

3. Procédé selon la revendication 2, **caractérisé en ce qu'**avant la réception du message d'alarme de la PU, le procédé comprend en outre :
la réception d'informations de liste de PU rapportées par n'importe quelle PU dans un système de surveillance vidéo, les informations de liste de PU enregistrant des informations concernant chaque PU dans la zone désignée où se trouve la PU quelconque en question.

4. Procédé selon la revendication 3, **caractérisé en ce qu'**avant la réception des informations de liste de PU rapportées par la PU quelconque en question, le procédé comprend en outre :
la recherche par la PU quelconque en question de PU qui se trouvent dans la zone où se trouve la PU quelconque en question ;
la PU quelconque en question envoyant un message de requête à au moins une PU recherchée pour demander l'acquisition d'au moins une identité, ID, de l'au moins une PU recherchée ;
la PU quelconque en question recevant un message de réponse comprenant au moins une ID de l'au moins une PU recherchée ;
la PU quelconque en question construisant les information de liste de PU en fonction de l'au moins une ID acquise.

5. Procédé selon la revendication 3, **caractérisé en ce que** la recherche de chaque PU dans la zone où se trouve la PU comprend :
selon les informations de la liste de PU, la recherche de chaque PU dans la zone désignée où se trouve la PU.

6. Procédé selon la revendication 3, **caractérisé en ce qu'**après la réception des informations de liste de PU rapportées par la PU quelconque en question, le procédé comprend en outre :
la mise à jour des informations de la liste de PU correspondant à la PU quelconque en question.

7. Procédé selon la revendication 1, **caractérisé en ce que** l'envoi des informations d'indication à la PU hors ligne comprend :
l'assemblage d'un message court comprenant les informations d'indication et l'envoi, par l'intermédiaire d'une interface de message court, du message court assemblé à un numéro de téléphone mobile de la PU hors ligne, l'interface de message court étant une interface entre le système de surveillance vidéo et la PU hors ligne.

8. Procédé selon la revendication 1, **caractérisé en ce que** l'envoi des informations d'indication à la PU hors ligne comprend :
l'envoi des informations d'indication à la PU hors ligne par l'intermédiaire d'un réseau mobile.

9. Procédé selon la revendication 5, **caractérisé en ce que** la PU quelconque en question recherchant l'au moins une PU qui se trouve dans la zone où se trouve la PU quelconque en question, comprend :
la recherche par la PU quelconque en question, par l'intermédiaire de Wireless Fidelity, WIFI, de l'au moins une PU qui se trouve dans la zone où se trouve la PU quelconque en question.

10. Dispositif d'indication en ligne, comprenant :
un composant de vérification d'état (10) conçu pour vérifier un état en ligne de chaque dispositif codeur vidéo frontal d'un système de surveillance vidéo, une PU, dans une zone désignée ; et
un composant d'indication en ligne (12) conçu pour, étant donné que le composant de vérification d'état vérifie qu'il existe une PU hors ligne, envoyer les informations d'indication à la PU hors ligne, les informations d'indication étant utilisées pour indiquer que la PU hors ligne démarre automatiquement en ligne.

11. Dispositif d'indication en ligne selon la revendication 10, **caractérisé en ce que** le dispositif comprend en outre :
un composant de réception d'alarme conçu pour recevoir un message d'alarme de la PU ; et
un composant de recherche conçu pour rechercher chaque PU dans la zone désignée où se trouve la PU.

12. Dispositif d'indication en ligne selon la revendication 11, **caractérisé en ce que** le dispositif comprend en outre :
un composant de réception de liste conçu pour recevoir les informations de liste de PU rapportées par n'importe quelle PU dans un système de surveillance vidéo, les informations de liste de PU enregistrant des informations concernant chaque PU dans la zone désignée où se trouve la PU quelconque en question.

13. Dispositif d'indication en ligne selon la revendication 12, **caractérisé en ce que** le composant de recherche comprend :
un élément de recherche conçu pour, selon les informations de liste de PU, rechercher chaque PU dans la zone désignée où se trouve la PU ;
de préférence, le dispositif comprend en outre : un composant de mise à jour de liste conçu pour mettre à jour les informations de liste de PU correspondant à la PU quelconque en question.

14. Système d'indication en ligne, **caractérisé en ce qu'**il comprend : un dispositif d'indication en ligne selon l'une quelconque des revendications 10 à 13 et un dispositif codeur vidéo frontal d'un système de surveillance vidéo, la PU et la PU comprenant :
un composant de recherche (20) conçu pour rechercher chaque PU dans une zone où se trouve la PU ;
un composant de requête d'identification (22) conçu pour envoyer un message de requête à chaque PU recherchée pour demander l'acquisition d'identité, ID, de chaque PU, la PU étant conçue pour recevoir
un message de réponse comprenant l'ID de chaque PU ;
un composant de construction de liste (24) conçu pour construire des informations de liste de PU en fonction de l'ID acquise.

15. Système d'indication en ligne selon la revendication 14, **caractérisé en ce que** la PU comprend en outre :
un composant de rapport de liste conçu pour rapporter les informations de liste de PU construites au dispositif d'indication en ligne.
